# EUROPEAN PATENT SPECIFICATION

(11) **EP 1 169 794 B1**
(45) Date of publication and mention of the grant of the patent: **15.02.2006**
(21) Application number: 00926964.8
(22) Date of filing: 17.04.2000
(51) Int. Cl.: H04B 7/26

(54) **DISCONTINUOUS TRANSMISSION CDMA SYSTEM**
CDMA-SYSTEM MIT DISKONTINUIERLICHER ÜBERTRAGUNG
SYSTEME AMRC DE TRANSMISSION DISCONTINUE

(30) Priority: 16.04.1999 GB 9908805; 27.04.1999 GB 9909689
(43) Date of publication of application: 09.01.2002
(73) Proprietor: Nokia Corporation, 02150 Espoo (FI)
(72) Inventor: LONGONI, Fabio, FIN-02130 Espoo (FI); AHMAVAARA, Kalle, FIN-00530 Helsinki (FI)
(74) Representative: Style, Kelda Camilla Karen
(86) International application number: PCT/EP2000/003453
(87) International publication number: WO 2000/064075

(56) References cited:
- EP-A- 0 565 504
- WO-A-97/02561

## Description

### Field of the invention

The present invention relates to a method of transmitting and in particular but not exclusively to a method of transmitting in a wireless telecommunications network.

### Background of the invention

The use of code division multiple access (CDMA) is being proposed for the next generation of cellular telecommunication networks. Additionally, code division multiple access is also being used in the IS-95 Standard in the USA. CDMA is a direct sequence spread spectrum technique. In a wireless cellular network using CDMA, the mobile terminals in one cell associated with a first base station will use the same frequency as mobile stations in an adjacent cell associated with a second base station. The different mobile stations can be distinguished by the respective base stations as each mobile station will be using a different spreading code.

In US-A-5101501 a CDMA system is described which uses "soft" handoff. With soft handoff, a mobile station is capable of communicating with more than one base station at the same time. This will typically occur when the mobile station is close to the boundary defined between two cells. The signals sent by the mobile stations will be received and processed by both of the base stations. Likewise, the mobile station will receive the same signal from the two base stations. The signals from the two base stations may be combined. The combined signal may provide better quality than the any of the individual signals received by the mobile station.

Thus, one mobile station can listen to two or more base stations simultaneously. It is therefore important that the information received by the mobile stations from the different base station be identical. If different information is received from the different base stations, the mobile station will have no way of determining which is the correct information and which information can be ignored. Additionally it will not be possible to combine the signals from the different base stations to provide a meaningful combined signal.

Generally, different information will be received by the mobile station because an error in transmission has occurred and one of the expected transmissions from one or more of the base stations is not transmitted by the base station. The base station may not receive any information to be transmitted to the mobile station for two reasons. Firstly there has been an error in the information received by the base station. Secondly, there is in fact no information to be received. The lack of information may be due to, for example a pause in conversation or because the transmission is a discontinuous transmission. It is therefore necessary to determine whether the lack of received information is intentional or whether it is due to an error.

It has been suggested by the inventor that empty frames of data can be sent to the base station in two different ways. These two ways do not constitute prior art. Firstly, the transmission is suspended. In other words, the base station will be sent nothing. This has the advantage that the processing resources at the base station are saved as well as in other network elements. The load at the interface between the base station and the network controller, which is sending the information to the base station, is reduced. However this method has the disadvantage that it is not possible to distinguish between a transmission error and the fact that there is no data. This leads to two problems.

Firstly, failures in the interface between the base station and the network controller are not detected by the base station in the case of information being sent from the network controller to the base station or by the network controller in the case of information being sent from the base station to the network controller.

Secondly, if a data frame is not received, due to an error, by a base station, that data frame cannot be transmitted by the base station to the mobile station. If the mobile station is in soft handoff, that is communicating with more than one base station at a time, the mobile station will receive different data streams from the base stations due to the error. This may lead to errors in the mobile station when it attempts to combine the different data streams.

The second method for dealing with empty frames of data is for the base station to be sent empty frames of data. This makes it possible to distinguish between errors and the fact that there is no information. However, this method does have the disadvantage that additional processing capacity is required at the base station and other network elements. Additionally, the load at the interface between the base station and the network controller is increased.

Similar problems can also occur in the uplink directions.

WO97/02561 discloses a method for mutual synchronisation of the transmitted speech encoder and a receiver speech decoder in a communication system utilising discontinuous transmitter between the transmitter and the receiver. Discontinuous transmission comprises temporarily sequential frame periods of which some periods will contain transmitted frames and some periods contain no transmission, whereby the method contains steps to generate information transmission periods comprising at least one frame and containing information given by a user to said transmitter device, and silence periods having a length of at least one frame period and containing other information than that given by the user. The discontinuous transmission further comprises an irregularly occurring period comprising at least one frame period between the information transmission period and the next silence period, the irregular period forming a hangover period to determine the information relating to the silence period. In the method according to the invention the number of frame periods is counted in the receiver until the certain moment, the beginning of said silence period is detected, and based on said counted number of frame periods and the beginning of the silence period it is decided whether or not there is a hangover period of said type between said information transmission period and the silence period following the information transmission period.

### Summary of the invention

It is an aim of embodiments of the present invention to provide a method of dealing with the absence of information or data which addresses the disadvantages of the known methods.

According to one aspect of the present invention, there is provided a method of transmitting from a first node to a second node, said method comprising the steps of transmitting in a first mode at least one data frame from said first node to said second node; and determining if there is no data to be transmitted and if there is no data to be transmitted transmitting at least one empty frame in the first mode; and switching to a second mode in which no transmission is made in the absence of data to be transmitted at least some of the time.

The first and second nodes may be any suitable elements in a telecommunications network.

According to a second aspect of the present invention there is provided a method of receiving transmissions from a first node at a second node, said transmission have a first mode in which if there is no data to be transmitted, empty frames are transmitted and a second mode in which if there is no data to be transmitted nothing is transmitted, said method comprising the steps of: receiving transmissions from said first node, wherein if the transmissions have a first mode and a frame is not received and error is determined to have occurred.

According to a third aspect of the present invention there is provided a first node for transmitting data to a second node, wherein said first node comprises transmitting means for transmitting data to said second node, said transmitting means have a first mode of operation in which data is transmitted in data frames and if there is no data to be transmitted empty frames are transmitted and a second mode of operation in which if there is no data no frames are transmitted.

According to a fourth aspect of the present invention, there is provided a second node for receiving transmissions from a first node at a second node, said transmissions have a first mode in which if there is no data to be transmitted, empty frames are transmitted and a second mode in which if there is no data to be transmitted nothing is transmitted, said second node comprising means for receiving transmissions from said first node, and determining means for determining that if the transmissions have a first mode and a frame is not received, an error has occurred

### Brief description of the drawings

For a better understanding of the present invention and as to how the same may be carried into effect, reference will now be made by way of example to the accompanying drawings in which:
Figure 1 shows a schematic diagram of part of a cellular telecommunications network incorporating base transceiver stations and mobile stations;
Figure 2 shows part of the network of Figure 1 in more detail; and
Figure 3 illustrates the normal and silent modes used by the base stations of Figure 1.

### Detailed description of embodiments of the invention

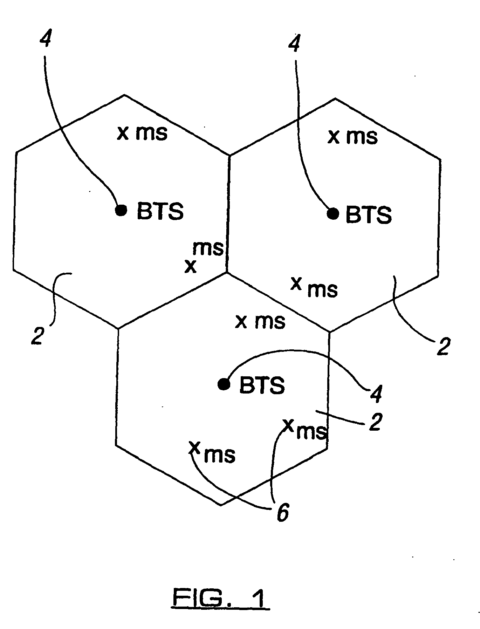

Reference will first be made to Figure 1 in which three cells 2 of a cellular telecommunications network are shown. Each cell 2 is served by a respective base transceiver station (BTS) 4. Each base transceiver station 4 is arranged to transmit signals to and receive signals from the mobile stations 6 located in the cell associated with the given base transceiver station 4. Likewise, each mobile station 6 is able to transmit signals to and receive signals from the respective base transceiver station 4.

The cellular telecommunications network shown in Figure 1 uses a code division multiple access technique. Accordingly, at least some of the mobile stations will be in communication with more than one base station at the same time. This, however, will be described in more detail hereinafter.

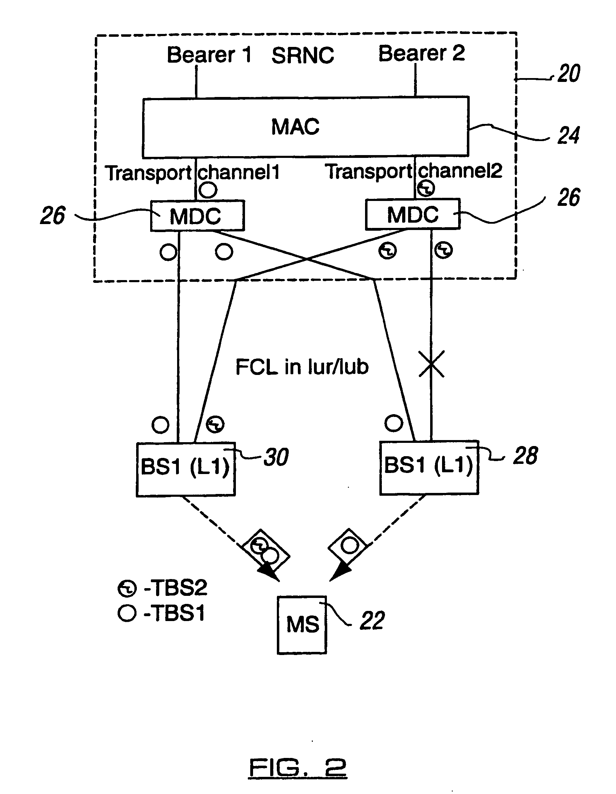

Reference is now made to Figure 2. As can be seen from this figure, the base stations are connected to a SRNC (serving radio network controller) 20. Data blocks are transmitted between the SRNC 20 and the base stations 28 and 30 using a frame protocol FP. A data frame contains data which is to be transmitted in one interleaving period and a transport format indicator TFI. The interleaving period is the period over which data is interleaved. The transport format indicator TFI provides information as to the format of the data frame such as the size of the data block, the interleaving period and the like.

Each UE (user equipment for example mobile stations or the like) has an independent transport connection which means that each frame contains the data and current transport format indicator TFI of one bearer only. Typically a call will have more than one bearer, for example a signalling bearer and a data or voice bearer. For downlink communications (from the SRNC 20 to the base station direction), all the data blocks of users having the same user equipment are multiplexed onto a single radio link. The manner in which the multiplexing is done will depend on the transport format indicator TFI of each frame which indicates the amount of data in each frame for the bearers. A transport format combination information TFCI field of the radio frame provided in a dedicated physical control channel DPCCH will indicate the manner in which the multiplexing is carried out. The transport format combination information TFCI field will indicate the transport format indicator TFI for each of the bearers whose data is multiplexed in the radio frame or frames in the dedicated physical data channel DPDCH. In the case of soft handoff where a mobile station is in communication with more than one mobile station at a time, the dedicated physical data channels DPDCH from each of the bases stations communicating with the mobile station in question will be the same as will the rate information RI fields in all the radio links.

The format described hereinbefore is part of the currently proposed UMTS (universal mobile telephone service) standard. It should be appreciated that any other standard can alternatively be used.

In the following, it is assumed for simplicity that there is only one bearer per transport channel and the SRNC does not carry out any multiplexing. The transport format information can have a particular value which indicates that the frame does not contain any data. For simplicity it is assumed that the particular value is zero although the particular value can be any other value.

The SRNC 20 shown in Figure 2 has first and second medium access controllers MAC 24 which receive the data from respective bearers. For simplicity, the medium access controllers 24 are each shown as receiving information from one bearer only. The medium access controllers can receive information from more than one bearer and carry out the multiplexing function described hereinbefore.

The medium access controller 24 receives an input from a first bearer Bearer 1 and a second bearer, Bearer 2 and outputs a first transport channel 1 and a second transport channel 2. The input from Bearer 1 maps to the first transport channel 1 and the input from Bearer 2 maps to the second transport channel 2. The transport channels are input to respective macrodiversity combiners 26. The macrodiversity combiners 26 output the transport channels to each base station which is in communication with the mobile station for which the transport channel is intended. In the example shown in Figure 2, the first transport channel 1 is output to first and second base stations 28 and 30 as is the second transport channel 2. Thus the first and second base stations are each arranged to transmit the same channels to a single mobile station.

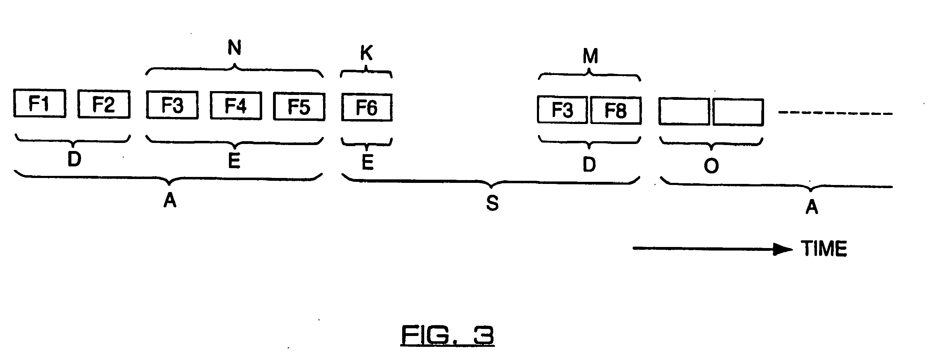

The mode of operation for transmission of information between the SRNC 20 and base stations will now be described with reference to Figure 3. Two modes are defined. The first mode is the normal mode and the second mode is the silent mode. The data which is to be sent to the mobile station is interspersed with periods where there is no data. This may occur during pauses in a conversation between two parties. Alternatively, in the case of non speech data, the data may be discontinuous.

In the normal mode A of operation, on the transmit side, the SRNC 20 transmits a frame F for every interleaving period. As shown in Figure 2, frames F1 and F2 contain data. If no data is present, frames F3, F4 and F5 which are empty frames E are sent. After N consecutively received empty frames E, the frame protocol connection is switched to the silent mode S. N can have any suitable value such as 1, 2 or 3 or any other suitable value.

In the silent mode S, on the transmit side, the SRNC 20 is prevented from transmitting any frame if there is no data in the frame. The SRNC may transmit K empty frames F6 at the beginning of the silent mode S to ensure that the base station has switched to the silent mode; also if up to K of the N empty frames previously sent have been lost during the transmission. After M consecutive frames F7 and F8 including data are transmitted, the frame protocol connection is switched to the normal mode A again. K may be 0 or 1 or any other suitable number. M can be 1, 2, 3 or any other suitable number.

In the normal mode A, on the receive side, if a frame is not received in an interleaving period, the base station generates an interface failure alarm and decides whether to transmit the radio frame without the data or to not transmit the frame at all. After the base station has received N empty frames, the frame protocol connection is switched to the silent mode S.

In the silent mode S, on the receive side, if a frame is not received in one interleaving period, the base station considers the bearer to be in an inactive state and sets the transport format indicator TFI to zero. After M consecutive data frames with data have been received, the frame control layer connection is switched to the normal mode A.

The parameters M, N and K may be:
1. predetermined, for example fixed in a standard used by the network;
2. Iub/Iur (Iub is the interface between the SRNC and the base station while Iur is the interface between two radio network controllers) interface protocol configurable parameters, that is the parameters can be set at each interface as required; and
3. signalled from the SRNC to base stations every time a new branch or bearer is set. The parameters may be reconfigurable as required.

Control frames which do not contain data but instead contain control information such as power control and synchronisation information are sent in both the normal mode and the silent mode. Control frames may not be present in either or both of these modes.

Reference will now be made to a second embodiment of the present invention which uses explicit signalling in order to switch from the normal mode to the silent mode. In this second embodiment, the base station will not automatically switch to the silent mode when a predetermined number of consecutive empty frames have been received. However, the transmission of a predetermined number of empty frames when in the normal mode can be used as an indication that the silent mode should be used. Of course, any other suitable measure can be used to determine that a switch should be made between the normal and the silent mode.

Once a determination has been made that the base station should stop using the normal mode and start using the silent mode, the radio network controller will include in the next frame sent to the base station a mode bit indicative of this. This mode bit may have a given value for the silent mode and the other value for the normal mode. Alternatively, one value of the bit indicates that the mode should change either from the normal to the silent mode or from the silent mode to the normal mode. The other value of the bit would indicate that the mode is not to be changed.

When the base station receives the frame transmitted by the radio network controller, it checks the mode bit. If this bit indicates that the mode is to change from the normal mode to the silent mode, the base station changes its mode and sends an acknowledgement confirming that the base station has understood that the mode is changed. Once the radio network controller has received the acknowledgement from the base station, the radio network controller will use the silent mode.

Changes from the silent mode to the normal mode can be achieved in the same way as in the first embodiment. However, it is also possible to alter the mode from the silent to normal mode in the following. When it is determined that the base station is to receive using the normal mode, the radio network controller will alter the mode bit in the next frame sent to the base station, to indicate that the mode should change to the normal mode. If a data frame is being sent to the base station, the mode bit will be altered in that frame. If no data frame is being sent to the base station due to an absence of data, the radio network controller will send an empty frame with the mode bit set accordingly.

The base station will send an acknowledgement indicating that it has received the frame and has noted that the mode is changed to the normal mode. When the radio network controller receives the acknowledgement, the radio network controller will then use the normal mode.

It is possible to use this second method to notify the base station by sending in advance information that the mode will change after a predetermined number of frames or the like.

The method used by the first embodiment has the advantage that the frame structure does not need to be altered. A second advantage of the first method is that two way communication does not have to be set up if one party, for example, the radio network controller is sending data to the base station and the base station is not sending any data to the radio network controller. The second method is advantageous in that both parties are certain as to which mode of operation is being used.

The acknowledgement sent by the base station to the radio network controller may use a mode bit in the frame, as described hereinbefore in relation to the frames sent from the radio network controller to the base station. Thus the acknowledgement may comprise the mode bit in the frame sent by the base station to the radio network changing to reflect the new mode. Either of the options for the mode bit described hereinbefore may be used.

In accordance with an embodiment a first node is arranged to transmit the same data to a plurality of second nodes, set plurality of second nodes transmitting the same data to a third node.

It should be appreciated that although the transmissions from the SRNC to the base station are described as using the normal and silent mode of operation, this mode of operation can alternatively or additionally be used for transmissions from the base station to the SRNC. The values of the parameters used in the downlink and uplink directions may differ. Embodiments of the present invention may be applied to the communications between any two nodes of a telecommunications network, wired or wireless.

It should be appreciated that although embodiments of the present invention are particularly advantageous when used in a soft handoff or similar context, that is when a mobile station is in communication with more than one base station at the same time, embodiments of the present invention can also advantageously be used where the mobile station is in communication with one base station at a time. In an alternative embodiment of the present invention, the normal and silent mode of operation may only be used when the mobile station is in communication with more than one base station at a time. A different mode of operation may be used when the mobile station is in communication with only one base station. The different mode of operation may be one which incorporates one of the previously known methods for dealing with empty frames.

Whilst preferred embodiments have been described in the context of a code division multiple access system, embodiments of the present invention can be used with any other spread spectrum technique or any other suitable access technique such as time division multiple access, frequency division multiple and space division multiple access as well as hybrids thereof.

## Claims

1. A method of transmitting from a first node to a second node, **characterised in that** said method comprising the steps of:
transmitting in a first mode at least one data frame from said first node (20,28,30) to said second node (20,28,30); and
determining if there is no data to be transmitted and if there is no data to be transmitted transmitting at least one empty frame in the first mode; and
switching to a second mode in which no transmission is made in the absence of data to be transmitted at least some of the time.

2. A method as claimed in claim 1, wherein said second mode is used if a predetermined number of empty frames are transmitted consecutively.

3. A method as claimed in claim 2, wherein the second node (20,28,30), if using the first mode, switches automatically to the second mode if the predetermined number of empty frames are transmitted consecutively.

4. A method as claimed in claim 1 or 2, comprising the step of the first node (20,28,30) sending information to the second node (20,28,30) advising that the mode is to change from the first mode to the second mode.

5. A method as claimed in claim 4, wherein the second node is arranged to confirm receipt of said information and when the first node (20,28,30) has received the confirmation from the second node, said first node is arranged to use said second mode.

6. A method as claimed in claim 4 or 5, wherein said information is in a frame transmitted from the first node (20,28,30)to the second node (20,28,30).

7. A method as claimed in any of claims 4 to 6, wherein said information is sent in advance of the change of mode.

8. A method as claimed in any preceding claim, wherein in said second mode, data to be transmitted is transmitted in data frames and if a predetermined number of data frames are transmitted, the first mode is used.

9. A method as claimed in claim 8, wherein if a predetermined number of data frames is received in said second mode, the first mode is automatically used.

10. A method as claimed in any of claims 1 to 8, wherein when the first node (20,28,30) is using the second mode and the mode is to be switched to the first mode, the first node is arranged to transmit information that the mode is to be switched to said second mode.

11. A method as claimed in claim 10, wherein the second node (20,28,30) is arranged to confirm receipt of said information that the mode is to be switched from said second mode to the first mode and the first node (20,28,30) is arranged to use the first mode when the confirmation has been received by the first node.

12. A method as claimed in any one of the preceding claims wherein if no data is to be transmitted at the beginning of the second mode, a predetermined number of empty frames are first transmitted and then no transmission is made in the absence of data to be transmitted.

13. A method as claimed in any one of the preceding claims, wherein said first node (20,28,30) is arranged to transmit the same data to a plurality of second nodes (20,28,30), said plurality of second nodes transmitting the same data to a third node.

14. A method of receiving transmissions from a first node (20,28,30) at a second node (20,28,30), wherein said transmission have a first mode and a second mode, **characterised in that** in the first mode if there is no data to be transmitted between the nodes (20,28,30), empty frames are transmitted and in the second mode if there is no data to be transmitted between the nodes (20,28,30 nothing is transmitted, said method comprising the steps of:
receiving transmissions from said first node, wherein if the transmissions have a first mode and a frame is not received an error is determined to have occurred.

15. A method as claimed in claim 14, wherein if an error is determined to have occurred, said second node (20,28,30) transmits an empty frame to a third node.

16. A method as claimed in claim 14, wherein if an error is determined to have occurred, said second node (20,28,30) transmits nothing to a third node (22).

17. A method as claimed in claim 15 or 16, wherein said third node (22) is a mobile station.

18. A method as claimed in any of claims 14 to 17, wherein after a predetermined number of empty frames are received in said first mode, determining that the second mode is used by the first node (20,28,30).

19. A method as claimed in any of claims 6 to 9, wherein when a predetermined number of frames of data are received in said second mode, determining that the first mode is used by the first node (20,28,30).

20. A method as claimed in any of claims 14 to 19, wherein a change in operation of said first node (20,28,30) is determined from information received by the second node (20,28,30) from the first node (20,28,30).

21. A method as claimed in claim 20, wherein said information is in at least one frame transmitted from the first node (20,28,30) to the second node (20,28,30).

22. A method as claimed in any preceding claim, wherein said first node (20,28,30) is a base station (28,30) or a radio network (20) controller in a wireless cellular telecommunications network.

23. A method as claimed in any preceding claim, wherein said second node (20,28,30) is a base station (28,30) or a radio network (20) controller in a wireless cellular telecommunications network.

24. A first node (20,28,30) for transmitting data to a second node (20,28,30), wherein said first node comprises transmitting means for transmitting to said second node, said transmitting means having a first mode of operation and a second mode of operation, **characterised in that** in the first mode of operation data is transmitted in data frames and if there is no data to be transmitted empty frames are transmitted and in the second mode of operation if there is no data no frames are transmitted at least some of the time.

25. A second node (20,28,30) for receiving transmissions from a first node (20,28,30) at a second node, said second node comprising means for receiving transmissions from said first node, said transmissions having a first mode and a second mode, **characterised in that** in the first mode if there is no data to be transmitted, empty frames are transmitted and in the second mode if there is no data to be transmitted nothing is transmitted, and by determining means for determining that if the transmissions have a first mode and a frame is not received, an error has occurred.

## Patentansprüche

1. Verfahren zur Übertragung von einem ersten Knoten an einen zweiten Knoten, **gekennzeichnet durch** die Schritte:
Übertragen von zumindest einem Datenrahmen in einer ersten Betriebsart von dem ersten Knoten (20, 28, 30) an den zweiten Knoten (20, 28, 30); und
Bestimmen, ob keine zu übertragenden Daten vorhanden sind, und Übertragen von zumindest einem leeren Rahmen in der ersten Betriebsart, wenn keine zu übertragenden Daten vorhanden sind; und
Umschalten in eine zweite Betriebsart, in welcher in Abwesenheit von zu übertragenden Daten zumindest manchmal keine Übertragung vorgenommen wird.

2. Verfahren gemäß Anspruch 1, wobei die zweite Betriebsart verwendet wird, wenn eine vorbestimmte Anzahl von leeren Rahmen hintereinander übertragen wird.

3. Verfahren gemäß Anspruch 2, wobei der zweite Knoten (20, 28, 30), wenn er die erste Betriebsart verwendet, automatisch in die zweite Betriebsart umschaltet, wenn die vorbestimmte Anzahl von leeren Rahmen hintereinander übertragen wird.

4. Verfahren gemäß Anspruch 1 oder 2, mit dem Schritt des ersten Knotens (20, 28, 30), Informationen an den zweiten Knoten (20, 28, 30) zu senden, die anzeigen, dass sich die Betriebsart von der ersten Betriebsart in die zweite Betriebsart zu wechseln hat.

5. Verfahren gemäß Anspruch 4, wobei der zweite Knoten eingerichtet ist, Empfang der Informationen zu bestätigen, und der erste Knoten eingerichtet ist, die zweite Betriebsart zu verwenden, wenn der erste Knoten (20, 28, 30) die Bestätigung von dem zweiten Knoten empfangen hat.

6. Verfahren gemäß Anspruch 4 oder 5, wobei die Informationen in einem Rahmen sind, der von dem ersten Knoten (20, 28, 30) an den zweiten Knoten (20, 28, 30) übertragen wird.

7. Verfahren gemäß einem der Ansprüche 4 bis 6, wobei die Informationen vor dem Betriebsartwechsel gesendet werden.

8. Verfahren gemäß einem der vorstehenden Ansprüche, wobei zu übertragende Daten in der zweiten Betriebsart in Datenrahmen übertragen werden und die erste Betriebsart verwendet wird, wenn eine vorbestimmte Anzahl von Datenrahmen übertragen wird.

9. Verfahren gemäß Anspruch 8, wobei automatisch die erste Betriebsart verwendet wird, wenn eine vorbestimmte Anzahl von Datenrahmen in der zweiten Betriebsart empfangen wird.

10. Verfahren gemäß einem der Ansprüche 1 bis 8, wobei der erste Knoten eingerichtet ist, Informationen zu übertragen, dass die Betriebsart in die zweite Betriebsart umzuschalten ist, wenn der erste Knoten (20, 28, 30) gerade die zweite Betriebsart verwendet und die Betriebsart in die erste Betriebsart umzuschalten ist.

11. Verfahren gemäß Anspruch 10, wobei der zweite Knoten (20, 28, 30) eingerichtet ist, Empfang der Informationen, dass die Betriebsart von der zweiten Betriebsart in die erste Betriebsart umzuschalten ist, zu bestätigen, und der erste Knoten (20, 28, 30) eingerichtet ist, die erste Betriebsart zu verwenden, wenn die Bestätigung von dem ersten Knoten empfangen wurde.

12. Verfahren gemäß einem der vorstehenden Ansprüche, wobei zuerst eine vorbestimmte Anzahl von leeren Rahmen übertragen wird und dann in Abwesenheit von zu übertragenden Daten keine Übertragung vorgenommen wird, wenn zu Beginn der zweiten Betriebsart kein Daten zu übertragen sind.

13. Verfahren gemäß einem der vorstehenden Ansprüche, wobei der erste Knoten (20, 28, 30) eingerichtet ist, die gleichen Daten an eine Vielzahl von zweiten Knoten (20, 28, 30) zu übertragen, wobei die Vielzahl von zweiten Knoten die gleichen Daten an einen dritten Knoten übertragen.

14. Verfahren zum Empfang von Übertragungen von einem ersten Knoten (20, 28, 30) an einem zweiten Knoten (20, 28, 30), wobei die Übertragungen eine erste Betriebsart und eine zweite Betriebsart aufweisen, **dadurch gekennzeichnet, dass** in der ersten Betriebsart leere Rahmen übertragen werden, wenn keine Daten zwischen den Knoten (20, 28, 30) zu übertragen sind, und in der zweiten Betriebsart nichts übertragen wird, wenn keine Daten zwischen den Knoten (20, 28, 30) zu übertragen sind, mit den Schritten:
Empfangen von Übertragungen von dem ersten Knoten, wobei bestimmt wird, dass ein Fehler aufgetreten ist, wenn die Übertragungen eine erste Betriebsart aufweisen und ein Rahmen nicht empfangen wird.

15. Verfahren gemäß Anspruch 14, wobei der zweite Knoten (20, 28, 30) einen leeren Rahmen an einen dritten Knoten überträgt, wenn bestimmt wird, dass ein Fehler aufgetreten ist.

16. Verfahren gemäß Anspruch 14, wobei der zweite Knoten (20, 28, 30) nichts an einen dritten Knoten (22) überträgt, wenn bestimmt wird, dass ein Fehler aufgetreten ist.

17. Verfahren gemäß Anspruch 15 oder 16, wobei der dritte Knoten (22) eine Mobilstation ist.

18. Verfahren gemäß einem der Ansprüche 14 bis 17, wobei bestimmt wird, dass von dem ersten Knoten (20, 28, 30) die zweite Betriebsart verwendet wird, nachdem eine vorbestimmte Anzahl von leeren Rahmen in der ersten Betriebsart empfangen wird.

19. Verfahren gemäß einem der Ansprüche 6 bis 9, wobei bestimmt wird, dass von dem ersten Knoten (20, 28, 30) die erste Betriebsart verwendet wird, wenn eine vorbestimmte Anzahl von Datenrahmen in der zweiten Betriebsart empfangen wird.

20. Verfahren gemäß einem der Ansprüche 14 bis 19, wobei ein Wechsel im Betrieb von dem ersten Knoten (20, 26, 30) aus Informationen bestimmt wird, die von dem ersten Knoten (20, 28, 30) durch den zweiten Knoten (20, 28, 30) empfangen werden.

21. Verfahren gemäß Anspruch 20, wobei die Informationen in zumindest einem Rahmen sind, der von dem ersten Knoten (20, 28, 30) an den zweiten Knoten (20, 28, 30) übertragen wird.

22. Verfahren gemäß einem der vorstehenden Ansprüche, wobei der erste Knoten (20, 28, 30) eine Basisstation (28, 30) oder eine Funknetzwerksteuerung (20) in einem drahtlosen zellularen Telekommunikationsnetzwerk ist.

23. Verfahren gemäß einem der vorstehenden Ansprüche, wobei der zweite Knoten (20, 28, 30) eine Basisstation (28, 30) oder eine Funknetzwerksteuerung (20) in einem drahtlosen zellularen Telekommunikationsnetzwerk ist.

24. Erster Knoten (20, 28, 30) zum Übertragen von Daten an einen zweiten Knoten (20, 28, 30), wobei der erste Knoten eine Übertragungseinrichtung zum Übertragen an den zweiten Knoten aufweist, wobei die Übertragungseinrichtung eine erste Betriebsart und eine zweite Betriebsart aufweist, **dadurch gekennzeichnet, dass** in der ersten Betriebsart Daten in Datenrahmen übertragen werden und leere Rahmen übertragen werden, wenn keine zu übertragenden Daten vorhanden sind, und in der zweiten Betriebsart zumindest manchmal keine Rahmen übertragen werden, wenn keine Daten vorhanden sind.

25. Zweiter Knoten (20, 28, 30) zum Empfangen von Übertragungen von einem ersten Knoten (20, 28, 30) an einem zweiten Knoten, wobei der zweite Knoten eine Einrichtung zum Empfangen von Übertragungen von dem ersten Knoten aufweist, wobei die Übertragungen eine erste Betriebsart und eine zweite Betriebsart aufweisen, **dadurch gekennzeichnet, dass** in der ersten Betriebsart leere Rahmen übertragen werden, wenn keine zu übertragenden Daten vorhanden sind, und in der zweiten Betriebsart nichts übertragen wird, wenn keine zu übertragenden Daten vorhanden sind, und durch eine Bestimmungseinrichtung zum Bestimmen, dass ein Fehler aufgetreten ist, wenn die Übertragungen eine erste Betriebsart aufweisen und ein Rahmen nicht empfangen wird.

## Revendications

1. Procédé de transmission depuis un premier noeud vers un deuxième noeud, **caractérisé en ce que** ledit procédé comprend les étapes consistant à :
transmettre dans un premier mode au moins une trame de données depuis ledit premier noeud (20, 28, 30) vers ledit deuxième noeud (20, 28, 30) ; et
déterminer s'il n'y a pas de données à transmettre et, s'il n'y a pas de données à transmettre, transmettre au moins une trame vide dans le premier mode ; et
permuter sur un deuxième mode dans lequel aucune transmission n'est faite en l'absence de données à transmettre au moins une partie du temps.

2. Procédé selon la revendication 1, dans lequel ledit deuxième mode est utilisé si un nombre prédéterminé de trames vides sont transmises les unes à la suite des autres.

3. Procédé selon la revendication 2, dans lequel le deuxième noeud (20, 28, 30), si le premier mode est utilisé, permute automatiquement sur le deuxième mode si le nombre prédéterminé de trames vides sont transmises les unes à la suite des autres.

4. Procédé selon la revendication 1 ou 2, comprenant l'étape dans laquelle le premier noeud (20, 28, 30) envoie des informations vers le deuxième noeud (20, 28, 30) pour l'avertir que le mode doit changer pour passer du premier mode au deuxième mode.

5. Procédé selon la revendication 4, dans lequel le deuxième noeud est agencé de manière à confirmer la réception desdites informations et, lorsque le premier noeud (20, 28, 30) a reçu la confirmation de la part du deuxième noeud, ledit premier noeud est agencé de manière à utiliser ledit deuxième mode.

6. Procédé selon la revendication 4 ou 5, dans lequel lesdites informations sont contenues dans une trame qui est transmise depuis le premier noeud (20, 28, 30) vers le deuxième noeud (20, 28, 30).

7. Procédé selon l'une quelconque des revendications 4 à 6, dans lequel lesdites informations sont envoyées avant que le changement de mode ait lieu.

8. Procédé selon l'une quelconque des revendications précédentes, dans lequel, dans ledit deuxième mode, les données à transmettre sont transmises dans des trames de données et, si un nombre prédéterminé de trames de données sont transmises, le premier mode est utilisé.

9. Procédé selon la revendication 8, dans lequel si un nombre prédéterminé de trames de données sont reçues dans ledit deuxième mode, le premier mode est automatiquement utilisé.

10. Procédé selon l'une quelconque des revendications 1 à 8, dans lequel, lorsque le premier noeud (20, 28, 30) utilise le deuxième mode et que le mode doit être permuté sur le premier mode, le premier noeud est agencé de manière à transmettre des informations signifiant que le mode doit être permuté sur ledit deuxième mode.

11. Procédé selon la revendication 10, dans lequel le deuxième noeud (20, 28, 30) est agencé de manière à confirmer la réception desdites informations signifiant que le mode doit être permuté depuis ledit deuxième mode sur le premier mode, et le premier noeud (20, 28, 30) est agencé de manière à utiliser le premier mode une fois que la confirmation a été reçue par le premier noeud.

12. Procédé selon l'une quelconque des revendications précédentes, dans lequel, s'il n'y a pas de données à transmettre lorsque le deuxième mode débute, un nombre prédéterminé de trames vides sont transmises tout d'abord, à la suite de quoi aucune transmission n'est faite s'il n'y a pas de données à transmettre.

13. Procédé selon l'une quelconque des revendications précédentes, dans lequel ledit premier noeud (20, 28, 30) est agencé de manière à transmettre les mêmes données vers une pluralité de deuxièmes noeuds (20, 28, 30), ladite pluralité de deuxièmes noeuds transmettant les mêmes données vers un troisième noeud.

14. Procédé de réception de transmissions en provenance d'un premier noeud (20, 28, 30) au niveau d'un deuxième noeud (20, 28, 30), dans lequel ladite transmission comprend un premier mode et un deuxième mode, **caractérisé en ce que** dans le premier mode, s'il n'y a pas de données à transmettre entre les noeuds (20, 28, 30), des trames vides sont transmises et, dans le deuxième mode, s'il n'y a pas de données à transmettre entre les noeuds (20, 28, 30), rien n'est transmis, ledit procédé comprenant les étapes consistant à :
recevoir des transmissions en provenance dudit premier noeud, dans lequel si les transmissions utilisent un premier mode et qu'une trame n'est pas reçue, une erreur est déterminée comme s'étant produite.

15. Procédé selon la revendication 14, dans lequel, si une erreur est déterminée comme s'étant produite, ledit deuxième noeud (20, 28, 30) transmet une trame vide vers un troisième noeud.

16. Procédé selon la revendication 14, dans lequel, si une erreur est déterminée comme s'étant produite, ledit deuxième noeud (20, 28, 30) ne transmet rien vers un troisième noeud (22).

17. Procédé selon la revendication 15 ou 16, dans lequel ledit troisième noeud (22) est une station mobile.

18. Procédé selon l'une quelconque des revendications 14 à 17, dans lequel, après qu'un nombre prédéterminé de trames vides ont été reçues dans ledit premier mode, une détermination que le deuxième mode est utilisé par le premier noeud (20, 28, 30) est réalisée.

19. Procédé selon l'une quelconque des revendications 6 à 9, dans lequel, après qu'un nombre prédéterminé de trames de données ont été reçues dans ledit deuxième mode, une détermination que le premier mode est utilisé par le premier noeud (20, 28, 30) est réalisée.

20. Procédé selon l'une quelconque des revendications 14 à 19, dans lequel un changement dans le fonctionnement dudit premier noeud (20, 28, 30) est déterminé à partir des informations reçues par le deuxième noeud (20, 28, 30) en provenance du premier noeud (20, 28, 30).

21. Procédé selon la revendication 20, dans lequel lesdites informations sont contenues dans au moins une trame qui est transmise depuis le premier noeud (20, 28, 30) vers le deuxième noeud (20, 28, 30).

22. Procédé selon l'une quelconque des revendications précédentes, dans lequel ledit premier noeud (20, 28, 30) est une station de base (28, 30) ou un contrôleur de réseau radio (20) dans un réseau de télécommunications cellulaire sans fil.

23. Procédé selon l'une quelconque des revendications précédentes, dans lequel ledit deuxième noeud (20, 28, 30) est une station de base (28, 30) ou un contrôleur de réseau radio (20) dans un réseau de télécommunications cellulaire sans fil.

24. Un premier noeud (20, 28, 30) pour transmettre des données vers un deuxième noeud (20, 28, 30), dans lequel ledit premier noeud comprend des moyens de transmission pour transmettre vers ledit deuxième noeud, lesdits moyens de transmission ayant un premier mode de fonctionnement et un deuxième mode de fonctionnement, **caractérisé en ce que**, dans le premier mode de fonctionnement, des données sont transmises dans des trames de données et s'il n'y a pas de données à transmettre, des trames vides sont transmises ; et dans le deuxième mode de fonctionnement, s'il n'y a pas de données à transmettre, aucune trame n'est transmise au moins une partie du temps.

25. Un deuxième noeud (20, 28, 30) pour recevoir des transmissions en provenance d'un premier noeud (20, 28, 30) au niveau d'un deuxième noeud, ledit deuxième noeud comprenant des moyens pour recevoir des transmissions en provenance dudit premier noeud, lesdites transmissions ayant un premier mode et un deuxième mode, **caractérisé en ce que**, dans le premier mode, s'il n'y a pas de données à transmettre des trames vides sont transmises et, dans le deuxième mode, s'il n'y a pas de données à transmettre, rien n'est transmis, et **caractérisé par** des moyens de détermination qui sont adaptés pour déterminer que, si les transmissions ont un premier mode et qu'une trame n'est pas reçue, une erreur s'est produite.
